# FASCICULE DE BREVET EUROPEEN

(11) **EP 3 615 487 B1**
(45) Date de publication et mention de la délivrance du brevet: **15.06.2022**
(21) Numéro de dépôt: 18724966.9
(22) Date de dépôt: 24.04.2018
(51) Int. Cl.: C03C 17/42

(54) **ARTICLE PROTÉGÉ PAR UNE COUCHE DE PROTECTION TEMPORAIRE RUGUEUSE**
DURCH EINE RAUE TEMPORÄRE SCHUTZABDECKUNG GESCHÜTZTER ARTIKEL
ITEM PROTECTED BY A ROUGH TEMPORARY PROTECTIVE COVER

(30) Priorité: 28.04.2017 FR 1753773
(43) Date de publication de la demande: 04.03.2020
(73) Titulaire: SAINT-GOBAIN GLASS FRANCE, 92400 Courbevoie (FR)
(72) Inventeur: DEVYS, Lucie, 75013 Paris (FR); GUILLEMOT, François, 75019 Paris (FR)
(74) Mandataire: Saint-Gobain Recherche
(86) Numéro de dépôt international: PCT/FR2018/051025
(87) Numéro de publication internationale: WO 2018/197803

(56) Documents cités:
- EP-A2- 2 297 057
- WO-A1-2015/019022
- FR-A1- 2 990 384

## Description

L'invention concerne des articles comprenant des substrats de verre éventuellement revêtus d'un revêtement fonctionnel protégés par une couche de protection temporaire. Ces articles sont destinés à être trempés thermiquement.

La majorité des substrats de verre plats sont fabriqués sous la forme d'un ruban continu, par exemple un ruban continu de verre flotté ou de verre coulé. Ces substrats de verre dits « PLF » (Plateaux de verre Large Format) sont obtenus directement par découpe transversale dans le ruban de verre. Ces substrats de verre ont donc au moins une dimension, en général la largeur, correspondant à la largeur du ruban de verre dont ils sont issus. L'autre dimension, en général la longueur, correspond à la longueur de ruban découpé. Les substrats de verres dits « PLF » ont typiquement des dimensions de 3,21 m par environ 6 m.

Ces substrats de verre peuvent être revêtus de revêtement fonctionnel. Il est connu d'utiliser des articles comprenant des substrats portant des revêtements fonctionnels afin de conférer auxdits substrats des propriétés optiques (couches miroirs ou antireflets), thermiques (couches bas-émissives, contrôle solaire ou antisolaires, notamment à base de couches d'argent) ou électriques (couches antistatiques, couches conductrices transparentes). Ces revêtements fonctionnels peuvent être déposés directement sur les substrats de verre grand format dits PLF.

Ces substrats subissent des étapes de transformation diverses telles que des étapes de découpe, de lavage, de façonnage des bords, d'assemblage et de traitements thermiques de type trempe. Il est courant et pratique de réaliser l'assemblage et/ou les traitements divers sur un lieu autre que celui où est fabriqué le substrat portant le revêtement fonctionnel. Ces substrats subissent donc également des étapes de stockage et de transport.

Lors des étapes de transport, de stockage ou entre deux étapes de transformation, il est en général nécessaire d'empiler plusieurs substrats pendant des durée allant de plusieurs heures à plusieurs mois. On peut notamment lister les étapes suivantes :
- l'étape de stockage des substrats éventuellement après dépôt du revêtement fonctionnel sur le lieu de production,
- l'étape de déplacement des substrats, du lieu de production vers le lieu de transformation,
- l'étape de stockage sur le lieu de transformation,
- entre l'étape de découpe et l'étape de façonnage de bords,
- entre l'étape de façonnage des bords et l'étape de lavage,
- entre l'étape de lavage et l'étape de trempe.

Le stockage et la manipulation de ces substrats de verre pose un véritable problème. D'une part, lors de toutes les étapes de manipulation des substrats, il existe un risque de salir ou de rayer les substrats de verre et/ou les revêtements fonctionnels. Mais surtout, des substrats de verre empilés ont tendance à adhérer les uns aux autres de sorte qu'il est difficile de les séparer. Ce phénomène est principalement dû à la présence d'eau qui se condense entre deux substrats. Par conséquent, l'adhésion des substrats entre eux est encore plus marquée lorsque les substrats sont stockés légèrement humide, par exemple, après l'étape de lavage.

De nombreuses solutions ont été proposées pour pallier le problème lié au stockage des substrats de verre notamment en milieu humide. Certaines visent spécifiquement à empêcher l'adhésion des substrats de verre entre eux. Les substrats de verre sont habituellement transportés et stockés empilés en position verticale à légèrement inclinée, et séparés les uns des autres soit par des lames d'air ou au moyen de matériaux intercalaires. Parmi les matériaux intercalaires utilisés, on peut citer le papier, les cordes, le carton et les billes polymériques notamment de billes en poly(méthacrylate de méthyle).

Ces différentes solutions ne sont pas entièrement satisfaisantes. En effet, il est parfois difficile de mettre en place ces matériaux intercalaires sans salir ou rayer les substrats de verre et/ou les revêtements fonctionnels.

Il serait particulièrement avantageux de disposer d'une solution permettant de stocker des substrats de verres au contact les uns des autres :
- sans soin particulier, les substrats pouvant être simplement empilés horizontalement ou verticalement,
- sans risque d'adhésion, peu importe la présence d'eau provenant de l'humidité ambiante ou d'eau résiduelle issue par exemple d'une étape de lavage.

Le demandeur a découvert que l'utilisation d'une couche de protection temporaire rugueuse destinée à être éliminée lors d'un traitement thermique de type trempe permet d'atteindre ces résultats.

L'invention concerne un article comprenant un substrat de verre comprenant deux faces principales définissant deux surfaces principales séparées par des bords et une couche de protection temporaire comprenant une matrice polymérique organique déposée sur au moins une partie d'une surface principale du substrat de verre caractérisé en ce que la couche de protection temporaire présente une surface rugueuse définie par un paramètre de rugosité surfacique Sa, correspondant à la hauteur moyenne arithmétique du profil de la surface, supérieur à 0,2 µm.

L'invention concerne également un procédé d'obtention d'un article traité à température élevée. L'article comprend un substrat de verre comprenant deux faces principales définissant deux surfaces principales séparées par des bords, ledit substrat en verre portant un revêtement fonctionnel déposé sur au moins une partie d'une surface principale. Le procédé comprend les étapes suivantes :
une étape de protection de l'article comprenant :
   - préparer une composition polymérisable,
   - appliquer et réticuler la composition polymérisable sur au moins une partie du substrat éventuellement revêtu du revêtement fonctionnel de façon à former une couche de protection temporaire présentant une épaisseur d'au moins 1 micromètre et une surface rugueuse définie par un paramètre de rugosité surfacique Sa, correspondant à la hauteur moyenne arithmétique de la surface, supérieur à 0,2 µm, une même étape de traitement thermique et de déprotection de l'article comprenant :
      - éliminer la couche de protection temporaire par traitement thermique à température élevée de type trempe, recuit et/ou bombage, notamment à une température supérieure à 200 °C, supérieure à 300 °C, ou supérieure à 400 °C.

Des substrats de verre comprenant une telle couche peuvent être empilés et stockés sans soin particulier. La solution de l'invention permet un gain de temps et des économies considérables pour le transformateur qui n'a plus à se soucier des conditions de stockage ou de manutention. Il peut alors s'affranchir de matériels couteux spécifiquement dédiés tels que des rayonnages et matériaux intercalaires.

Le demandeur a développé une couche de protection temporaire spécifiquement utilisée pour protéger des substrats de verre destinés à être tremper thermiquement. Ces couches de protection, décrites dans la demande WO 2015/019022, sont qualifiées de « temporaire » car elles sont éliminées lors de la trempe par décomposition thermique.

La trempe thermique consiste à porter un substrat de verre à une température proche de son point de ramollissement (de 570 à 700 °C, en fonction de sa composition) et à le refroidir rapidement.

Les couches de protection temporaire décrites dans la demande WO 2015/019022 ont pour objectif de protéger les articles des rayures et de la corrosion lors du stockage notamment en milieu humide. Ces couches temporaires ne sont pas utilisées dans le but d'optimiser les conditions de stockage et notamment de s'affranchir de l'utilisation de matériaux intercalaires.

Le demandeur a découvert de manière surprenante qu'il est possible de conférer facilement à ces couches de protection temporaires, par différents procédés, une rugosité particulière. La combinaison du choix de cette rugosité, de la nature organique de la couche de protection et d'épaisseurs suffisantes, permet de protéger efficacement des substrats de verre peu importe les conditions de stockage, de manutention ou les étapes de transformation. La couche de protection temporaire rugueuse permet d'empiler des substrats de verre, même lorsque les substrats sont humides, sans risque d'adhésion entre substrats et sans utiliser de matériaux intercalaires.

La rugosité permet l'écoulement et l'évaporation de l'eau. On maintient la présence d'une couche d'air entre les substrats empilés. De plus, même si une quantité d'eau reste piégée entre un substrat de verre et la couche de protection temporaire rugueuse d'un autre substrat de verre, la zone de contact avec cette quantité d'eau est limitée. Or, l'adhésion entre deux substrats est fonction de la force capillaire. La force capillaire dépend de l'étendu des zones de contact. En limitant les zones de contact, on limite les forces capillaires et donc l'adhésion des substrats entre eux.

Rien n'indiquait dans la demande WO 2015/019022 que de telles rugosités pouvaient être obtenues. Cette demande ne comporte aucune indication sur la rugosité des couches de protection temporaire.

Seules des expérimentations en vue d'optimiser les conditions de stockage ont permis de mettre en évidence un effet bénéfique directement attribuable à l'utilisation d'une couche de protection temporaire présentant une épaisseur et une rugosité particulière.

La solution de l'invention est encore plus avantageuse lorsque le substrat de verre est revêtu d'un revêtement fonctionnel. Beaucoup de revêtements fonctionnels déposés sur des substrats présentent une résistance mécanique faible notamment une aptitude à la rayure élevée et une faible résistance à l'abrasion. Lors du stockage, si l'adhésion entre deux substrats intervient du côté du revêtement fonctionnel, le risque d'endommager le revêtement fonctionnel est élevé. La couche de protection temporaire selon l'invention en empêchant l'adhésion entre deux substrats protège parfaitement les substrats revêtus.

La couche de protection temporaire est de préférence déposée et réticulée grâce des moyens adaptés directement intégrable en sortie de float ou de l'enceinte de dépôt du revêtement fonctionnel. Cela permet de prévenir toute contamination des substrats éventuellement revêtus et de fabriquer en continu des articles protégés.

La formulation de la couche temporaire est adaptée pour être totalement éliminée suite au traitement thermique sans nuire aux propriétés optiques du substrat portant le revêtement fonctionnel.

La couche de protection temporaire est obtenue à partir d'une composition polymérisable. La couche de protection temporaire comprend une matrice polymérique. La matrice polymérique est essentiellement de nature organique. Cette matrice résulte de la réticulation des composés organiques polymérisables présents dans la composition polymérisable.

La rugosité revendiquée peut être obtenue de différentes manières.

Selon un premier mode de réalisation, les conditions de dépôts de la composition polymérisables sont choisies pour obtenir une couche de protection temporaire présentant l'épaisseur et la rugosité requise. Les conditions de dépôt sont notamment la viscosité et la vitesse de dépôt pour la composition polymérisable. La vitesse de dépôt dépend du choix du dispositif de dépôt. Par exemple, pour l'enduction au rouleau, la vitesse de dépôt dépend du choix de la vitesse de défilement du substrat et/ou de la vitesse du rouleau.

Le demandeur a découvert qu'il est possible de déposer par enduction au rouleau une couche de protection temporaire qui présente en surface des défauts de planéité sous la forme de vaguelettes. Ces vaguelettes sont parallèles à l'axe de rotation du rouleau de dépôt.

Cette rugosité sous forme de vaguelette est obtenue en créant une instabilité notamment en choisissant un nombre capillaire élevé (Ca). Le nombre capillaire est un nombre sans dimension représentant le rapport entre les forces visqueuses et la tension superficielle. On le définit de la manière suivante : Ca = (v x η) / σ
avec :
- *v :* la vitesse de dépôt de la composition polymérisable,
- η : la viscosité dynamique,
- *σ:* la tension superficielle de la composition polymérisable.

La composition polymérisable est ensuite réticulée. Selon ce mode de réalisation, la surface rugueuse est obtenue par le dépôt de la composition polymérisable par enduction au rouleau avec une vitesse d'application suffisamment rapide pour créer en surface des instabilités et une réticulation réalisée suffisamment rapidement pour figer ces instabilités.

Selon un autre mode de réalisation, la rugosité est obtenue par dépôt de la composition polymérisable par enduction au rouleau avec un rouleau texturé. La composition polymérisable est ensuite réticulée. Le motif texturé du rouleau confère la rugosité requise. Selon ce mode de réalisation, la surface rugueuse est obtenue grâce à l'utilisation d'un rouleau texturé.

Selon un autre mode de réalisation, la rugosité est obtenue par dépôt de la composition polymérisable suivie de l'embossage de la surface. L'embossage permet de créer des formes en relief à la surface de la composition polymérisable. La composition polymérisable est ensuite réticulée. Les formes en reliefs confèrent la rugosité requise. Selon ce mode de réalisation la surface rugueuse est obtenue par embossage de la surface de la composition polymérisable une fois déposée et avant réticulation.

Selon un autre mode de réalisation, la rugosité peut être obtenue en ajoutant des particules, de préférence organiques, dispersées dans la matrice polymérique de la couche de protection temporaire. Ces particules doivent présenter des dimensions suffisantes pour faire partiellement saillie en surface de la matrice polymérique ou générer des défauts de planéité de surface et conférer ainsi la rugosité requise.

La rugosité de surface de la couche de protection temporaire peut être caractérisée par sa période et son amplitude. Les paramètres choisis pour caractériser l'amplitude sont les paramètres de rugosité surfaciques définis selon la norme ISO251783 :
- Sa : hauteur moyenne arithmétique du profil de la surface,
- Sz : Hauteur maximale du profil de la surface, du plus haut point à la plus profonde vallée,
- sq : hauteur moyenne quadratique du profil de la surface.

La période est définie par le paramètre de rugosité en 2 dimensions RSM selon la norme ISO 4287.

Dans la présente demande, les paramètres de rugosité sont obtenus de la façon suivante. Des surfaces représentatives d'environ (10 à 15) x (10 à 15) mm² ont été analysées sur chaque échantillon. De préférence, on choisit trois positions différentes pour chaque échantillon. Ces images sont obtenues par profilométrie interférentielle à l'aide du profilomètre Zygo Newview^{™} avec un grossissement x 0,5. Les données sont ensuite traitées par le logiciel MountainsMap ^{®}.

Les paramètres de rugosité de surface tridimensionnels ont été calculés en utilisant une longueur d'analyse combinée à un filtre Gaussien passe bas appropriés (ISO 16610-21 pour les profils). La longueur d'analyse et le choix filtre passe bas sont choisis judicieusement afin de distinguer les paramètres d'ondulation des paramètres de rugosité. Dans la présente demande, une longueur d'analyse du profil d'environ 15 mm et un filtre Gaussien passe bas de 2,5 mm ont été utilisés.

La surface rugueuse présente un paramètre de rugosité surfacique Sz correspondant à la hauteur maximale du profil de la surface, par ordre de préférence croissant :
- supérieur à 1,0 µm, supérieur à 2,0 µm, supérieur à 3,0 µm, supérieur à 4,0 µm, supérieur à 5,0 µm, et/ou
- inférieur à 15,0 µm, inférieur à 10,0 µm, inférieur à 9,0 µm, inférieur à 8,0 µm, inférieur à 7,0 µm.

Avantageusement, le paramètre de rugosité surfacique Sz, correspondant à la hauteur maximale de la surface, représente, par ordre de préférence croissant, au moins 10 %, au moins 20 %, au moins 30 %, au moins 40 %, de l'épaisseur moyenne de la couche de protection temporaire.

La couche de protection temporaire est continue. Cela signifie que la couche temporaire n'est pas constituée d'un empilement de particules polymériques colloïdales discernables telles que décrites dans la demandes WO 2009/153490. Cela signifie que le paramètre de rugosité surfacique Sz ne représente pas 100 % de l'épaisseur moyenne de la couche de protection temporaire. De préférence, le paramètre de rugosité surfacique Sz représente, par ordre de préférence croissant, au plus 80 %, au plus 70 %, au plus 60 %, au plus 50 % de l'épaisseur moyenne de la couche de protection temporaire. La surface rugueuse présente un paramètre de rugosité surfacique Sa correspondant à la hauteur moyenne arithmétique du profil de la surface, par ordre de préférence :
- supérieur à 0,2 µm, supérieur à 0,3 µm, supérieur à 0,4 µm, et/ou
- inférieur à 5,0 µm, inférieur à 4,0 µm, inférieur à 3,0 µm, inférieur à 2,0 µm, inférieur à 1,5 µm, inférieur à 1,0 µm.

Avantageusement, le paramètre de rugosité surfacique Sa, correspondant à la hauteur moyenne arithmétique du profil de la surface, représente, par ordre de préférence croissant, au moins 1 %, au moins 2 %, au moins 3 %, de l'épaisseur moyenne de la couche de protection temporaire.

La surface rugueuse présente un paramètre de rugosité surfacique Sq correspondant à la hauteur moyenne quadratique du profil de la surface, par ordre de préférence croissant :
- supérieur à 0,2 µm, supérieur à 0,3 µm, supérieur à 0,4 µm, et/ou
- inférieur à 5,0 µm, inférieur à 4,0 µm, inférieur à 3,0 µm, inférieur à 2,0 µm, inférieur à 1,5 µm, inférieur à 1,0 µm.

La surface rugueuse présente un paramètre de rugosité Rsm, correspondant à la largeur moyenne des éléments du profil, par ordre de préférence croissant :
- supérieur à 0,5 mm, supérieur à 0,6 mm, supérieur à 0,8 mm, supérieur à 1 mm, et/ou
- inférieur à 5,0 mm, inférieur à 4,0 mm, inférieur à 3,0 mm, inférieur à 2,0 mm, inférieur à 1,5 mm.

La rugosité de surface peut être composée de défauts de planéité ou de motifs imprimés ayant une disposition aléatoire, orientés ou ordonnée. Selon l'invention, il suffit qu'un article satisfasse le ou les paramètres de rugosité revendiqués dans une direction. En effet, lorsque la rugosité est obtenue grâce à des défauts de planéité sous forme de vaguelettes, seule une mesure des paramètres de rugosité perpendiculaire aux vaguelettes rend compte des différences maximales de hauteur des motifs.

Dans la suite du texte, les modes de réalisation préférés s'appliquent de la même manière aux différents objets de l'invention, l'article et le procédé.

La couche de protection temporaire selon l'invention est spécifiquement destinée à être éliminée lors d'une trempe thermique à une température suffisante pour permettre son élimination par décomposition thermique sans nuire aux propriétés optiques, énergétiques ou thermiques du substrat portant éventuellement un revêtement fonctionnel. Une seule et même étape de traitement thermique du substrat protégé permet d'éliminer la couche de protection du substrat et de conférer au substrat certaines propriétés ou conformation (substrat trempé et/ou bombé).

La couche de protection temporaire présente avantageusement les caractéristiques suivantes :
- elle a une épaisseur d'au moins 1 micromètre,
- elle est non soluble dans l'eau,
- elle est obtenue à partir d'une composition polymérisable comprenant des composés (méth)acrylates,
- elle est durcie par séchage, par cuisson IR, par irradiation UV ou par faisceau d'électrons.

Avantageusement, la couche de protection temporaire présente une épaisseur, par ordre de préférence croissant :
- supérieur à 1 µm, supérieur à 5 µm, supérieur à 10,0 µm, supérieur à 12,0 µm,
- inférieur à 50,0 µm, inférieur à 40,0 µm, inférieur à 30,0 µm, inférieur à 25,0 µm, inférieur à 20,0 µm.

Les épaisseurs peuvent être mesurées l'aide d'un profilomètre Dektak.

La matrice polymérique représente au moins 80 % en masse de la couche de protection temporaire.

La couche de protection temporaire comprend essentiellement des matériaux organiques de type polymère (méth)acrylate. Sa formulation chimique permet une combustion rapide et complète durant un traitement thermique et ne génère lors de sa décomposition que des molécules volatiles faciles à éliminer.

La couche de protection temporaire est obtenue à partir d'une composition polymérisable. La composition polymérisable comprend des composés (méth)acrylates choisis parmi des monomères, des oligomères, des prépolymères ou des polymères comprenant au moins une fonction (méth)acrylate.

De préférence, la matrice polymérique est obtenue à partir d'une composition polymérisable comprenant des composés organiques polymérisables, de préférence des composés (méth)acrylates. Les composés (méth)acrylates ayant réagis rentre eux représentant au moins 80%, de préférence au moins 90%, voire 100% en masse de la matrice polymérique.

L'application d'une couche de protection temporaire obtenue à partir d'une composition liquide essentiellement exempte de solvant et durcie de préférence par irradiation UV, par cuisson IR ou par faisceau d'électrons est particulièrement avantageuse. Le choix de cette technologie sans solvant simplifie de manière considérable la mise en œuvre industrielle d'un procédé comprenant une étape d'application d'une telle couche. L'absence de solvant permet d'éviter la mise en place d'un dispositif de séchage, de récupération, de traitement des vapeurs de solvant qui ne doivent pas être émises dans l'atmosphère. Les modifications à apporter peuvent se limiter à insérer en fin de ligne un dispositif de dépôt par exemple par enduction au rouleau « roller coater » ainsi qu'un dispositif de réticulation tel qu'une lampe UV.

La couche de protection temporaire selon l'invention est de préférence appliquée en sortie de la ligne de fabrication des substrats portant des revêtements fonctionnels. L'étape de dépôt de la couche de protection temporaire peut être facilement intégrée dans le procédé de fabrication du substrat portant le revêtement fonctionnel.

La composition polymérisable présente, grâce au choix judicieux des composés (méth)acrylates, une viscosité adaptée pour permettre d'obtenir facilement une couche de protection temporaire d'épaisseur supérieure ou égale à 1 µm et une réactivité suffisante pour permettre une réticulation quasiment instantanée sur toute l'épaisseur. La nature chimique, le degré de réticulation, la densité ainsi que l'épaisseur de la couche de protection temporaire concourent à l'obtention d'une protection efficace contre l'abrasion, l'apparition de rayures et la corrosion. Ces propriétés de protection sont obtenues pour des épaisseurs inférieures à 50 micromètres.

Enfin, l'absence de solvant couplée au durcissement quasiment instantané par exemple par irradiation UV ou par faisceau d'électrons permet d'obtenir des substrats protégés sans incidence sur les cadences de fabrication. Avantageusement, les vitesses d'enduction sont compatibles avec les vitesses de dépôt des revêtements fonctionnels ce qui permet une fabrication continue des substrats portant un revêtement fonctionnel et une couche de protection temporaire selon l'invention. Par exemple, les vitesses d'application de la couche de protection temporaire, comprenant par exemple l'enduction et la réticulation, peuvent être comprises entre 1 et 90 m/min sur un substrat de largeur 1 m à 3,3 m.

Cette couche de protection temporaire non soluble dans l'eau permet d'obtenir une protection efficace lors de l'étape de lavage et contre la corrosion humide. La protection est conservée même lorsque le substrat subit des découpes successives. En effet, les substrats protégés selon l'invention semblent protégés des mécanismes de corrosion qui pourraient s'initier d'une part en pleine face mais également à partir du bord de découpe. Les substrats protégés selon l'invention peuvent donc être découpés plusieurs fois sans nécessiter de modifier la couche de protection et sans perdre les fonctions de protection mécanique et chimique.

De préférence, le substrat protégé, c'est-à-dire le substrat portant la couche de protection temporaire n'a pas subi de traitement thermique de type trempe, recuit et/ou bombage, c'est-à-dire de traitement thermique à une température supérieure à 200 °C ou supérieure à 400 °C. Le substrat protégé n'est pas trempé et/ou bombé.

Bien que l'invention convienne tout particulièrement pour la protection de substrats portant des revêtements fonctionnels mécaniquement faibles, la solution de l'invention peut s'appliquer à la protection de substrats portant tous types de revêtement fonctionnel.

Selon un mode de réalisation, le substrat est revêtu d'un revêtement fonctionnel déposé sur au moins une partie d'une surface principale et la couche de protection temporaire est déposée sur au moins une partie du revêtement fonctionnel.

De préférence, le substrat portant le revêtement fonctionnel n'a pas subi de traitement thermique à température élevée de type trempe, recuit et/ou bombage, c'est-à-dire de traitement thermique à une température supérieure à 200 °C ou supérieure à 400 °C. Cela signifie que l'article formé par le substrat et le revêtement fonctionnel n'a pas subi de traitement thermique à température élevée. Cela signifie également que le procédé ne comporte pas d'étape de traitement thermique à température élevée, c'est-à-dire de traitement thermique à une température supérieure à 200 °C ou supérieure à 400 °C, entre le dépôt du revêtement fonctionnel et le dépôt de la couche de protection temporaire.

Le revêtement fonctionnel réfléchit les infra-rouges. Le revêtement fonctionnel peut être classiquement déposé par pulvérisation cathodique. Le procédé de dépôt industriel consiste à faire défiler les substrats sur une ligne de fabrication continue comprenant une ou plusieurs enceintes de dépôt sous vide.

Le revêtement fonctionnel comprend au moins une couche fonctionnelle. La couche fonctionnelle est de préférence une couche pouvant agir sur le rayonnement solaire et/ou le rayonnement infrarouge de grande longueur d'onde. Ces couches fonctionnelles sont par exemple des couches fonctionnelles métalliques à base d'argent ou d'alliage métallique contenant de l'argent.

Le substrat peut comprendre un revêtement fonctionnel comprenant un empilement de couches minces comportant successivement à partir du substrat une alternance de n couches métalliques fonctionnelles, notamment de couches fonctionnelles à base d'argent ou d'alliage métallique contenant de l'argent, et de (n+1) revêtements antireflets, chaque revêtement antireflet comportant au moins une couche diélectrique, de manière à ce que chaque couche métallique fonctionnelle soit disposée entre deux revêtements antireflets. De préférence, n vaut 1, 2, 3 ou 4. De façon encore plus préférée, n est supérieur à 1 notamment n vaut 2 ou 3.

Le substrat peut comprendre un empilement de couches minces comportant successivement à partir du substrat une alternance de deux couches métalliques fonctionnelles, notamment de couches fonctionnelles à base d'argent ou d'alliage métallique contenant de l'argent, et de trois revêtements antireflets, chaque revêtement antireflet comportant au moins une couche diélectrique, de manière à ce que chaque couche métallique fonctionnelle soit disposée entre deux revêtements antireflets.

Le substrat peut également comprendre un empilement de couches minces comportant successivement à partir du substrat une alternance de trois couches métalliques fonctionnelles, notamment de couches fonctionnelles à base d'argent ou d'alliage métallique contenant de l'argent, et de quatre revêtements antireflets, chaque revêtement antireflet comportant au moins une couche diélectrique, de manière à ce que chaque couche métallique fonctionnelle soit disposée entre deux revêtements antireflets.

L'épaisseur du revêtement fonctionnel est :
- supérieure à 100 nm, de préférence supérieure à 150 nm,
- inférieure à 300 nm, de préférence inférieure à 250 nm.

Selon un mode de réalisation particulièrement avantageux de l'invention, le revêtement fonctionnel comprend une couche supérieure choisie parmi les nitrures, oxydes ou oxy-nitrures de titane et/ou de zirconium. La couche supérieure du revêtement fonctionnel est la couche la plus éloignée du substrat et/ou la couche en contact direct avec la couche de protection temporaire.

La couche supérieure peut en particulier être une couche :
- de nitrure de titane ; de nitrure de zirconium ; de nitrure d'hafnium ; de nitrure de titane et de zirconium ; de nitrure de titane, de zirconium et d'hafnium ;
- d'oxyde de titane ; d'oxyde de zirconium ; d'oxyde d'hafnium ; d'oxyde de titane et de zirconium ; d'oxyde de titane, de zirconium et d'hafnium.

L'épaisseur de ces couches supérieures est préférentiellement comprise entre 1 et 20 nm et mieux comprise entre 1 et 5 nm.

Selon une variante, la couche supérieure peut être une couche de nitrure de silicium éventuellement dopé à l'aluminium. L'épaisseur de cette couche supérieure est préférentiellement comprise entre 5 et 50 nm et mieux comprise entre 10 et 50 nm.

Le revêtement fonctionnel peut être déposé par tout moyen connu tel que par pulvérisation cathodique assistée par un champ magnétique, par évaporation thermique, par CVD ou PECVD, par pyrolyse, par dépôt par voie chimique, par voie de type sol-gel ou dépôt de couches inorganiques par voie humide.

Le revêtement fonctionnel est de préférence déposé par pulvérisation cathodique assistée par un champ magnétique. Selon ce mode de réalisation avantageux, toutes les couches du revêtement fonctionnel sont déposées par pulvérisation cathodique assistée par un champ magnétique. La couche de protection temporaire est avantageusement directement au contact du revêtement fonctionnel.

La couche de protection temporaire est essentiellement de nature organique. Les composés (méth)acrylates ayant réagis rentre eux représentent au moins 90% en masse de la masse de la couche de protection temporaire.

Par (méth)acrylate, on entend un acrylate ou un méthacrylate. On entend par « composés (méth)acrylate », les esters de l'acide acrylique ou méthacrylique comportant au moins une fonction acroyle (CH2=CH-CO-) ou méthacroyle (CH2=CH(CH3)-CO-). Ces esters peuvent être des monomères, des oligomères, des pré-polymères ou des polymères. Ces composés (méth)acrylate, lorsqu'ils sont soumis aux conditions de polymérisation, donnent un réseau polymère doté d'une structure solide.

Les composées (méth)acrylate utilisés selon l'invention peuvent être choisis parmi les (méth)acrylates monofonctionnels et polyfonctionnels tels que les (méth)acrylates mono-, di-, tri-, poly-fonctionnels. Des exemples de tels monomères sont :
- les (méth)acrylates monofonctionnels tels que le méthyl(méth)acrylate, éthyl(méth)acrylate, n- ou ter-butyl(méth)acrylate, hexyl(méth)acrylate, cyclohexyl(méth)acrylate, 2-éthylhexyl(méth)acrylate, benzyl(méth)acrylate, 2-éthoxyethyl(méth)acrylate, phenyloxyethyl(méth)acrylate, hydroxyethylacrylate, hydroxypropyl(méth)acrylate, vinyl(méth)acrylate caprolactone acrylate, isobornyl méthacrylate, lauryl methacrylate, polypropylène glycol monométhacrylate,
- les (méth)acrylates difonctionnels tels que 1,4-butanediol di(méth)acrylate, éthylène diméthacrylate, 1,6-hexandiol di(méth)acrylate, bisphénol A di(méth)acrylate, triméthylolpropane diacrylate, triéthylène glycol diacrylate, éthylène glycol di(méth)acrylate, polyéthylène glycol di(méth)acrylate, le tricyclodécane diméthanol diacrylate,
- les (méth)acrylates trifonctionnels tels que triméthylolpropane triméthacrylate, triméthylolpropane triacrylate, pentaérythritol triacrylate, trimethylolpropane triacrylate éthoxylé, trimethylolpropane triméthacrylate, tripropylène glycol triacrylate,
- les (méth)acrylate de fonctionnalité supérieure tels que pentaérythritol tétra(méth)acrylate, ditriméthylpropane tétra(méth)acrylate, dipentaérythritol penta(méth)acrylate ou hexa(méth)acrylate.

La couche de protection temporaire ne comprend pas d'additifs non susceptibles d'être éliminés lors du traitement thermique tels que des composés organiques comprenant du silicium de type siloxanes.

La couche de protection temporaire présente une épaisseur :
- supérieure à 1 micromètre, de préférence supérieure à 5 micromètres,
- inférieure à 100 micromètres, de préférence inférieure à 50 micromètres,
- comprise entre 2 et 100 micromètres, entre 5 et 50 micromètres ou entre 10 et 30 micromètres.

La couche de protection temporaire présente un grammage compris entre 5 et 50 g/m², de préférence entre 10 et 30 g/m².

Selon des modes de réalisations avantageux de l'invention, la composition polymérisable présente les caractéristiques suivantes :
- la composition polymérisable comprend moins de 20% en masse de solvant par rapport à la masse totale de la composition liquide,
- la composition polymérisable comprend moins de 10% en masse de solvant par rapport à la masse totale de la composition liquide,
- la composition polymérisable est sans solvant,
- la composition polymérisable présente une viscosité mesurée entre 20 et 25 °C bornes incluses :
   - d'au moins 0,05 Pa.s, d'au moins 0,08 Pa.s, d'au moins 0,1 Pa.s, d'au moins 0,50 Pa.s,
   - d'au plus 5 Pa.s, d'au plus 2 Pa.s,
   - comprise entre 0,05 et 5 Pa.s ;
- la composition polymérisable comprend au moins un initiateur de polymérisation, de préférence un photoinitiateur,
- l'initiateur de polymérisation représente 0,1 à 20 %, ou 1 à 15 %, de préférence 5 à 15 % et mieux 8 à 12 % en masse de la masse totale des composés (méth)acrylates,
- la composition polymérisable comprend en outre au moins un additif choisi parmi les plastifiants, les absorbeurs, des agents de séparation, des stabilisants à la chaleur et/ou à la lumière, des agents épaississants ou des modificateurs de surface,
- la somme de tous les additifs est comprise entre 0 et 5 % en masse de la masse de la composition liquide,
- les composés (méth)acrylates choisis parmi les esters de l'acide acrylique ou méthacrylique comportant au moins deux fonctions acroyle (CH2=CH-CO-) ou méthacroyle (CH2=CH(CH3)-CO-),
- la composition polymérisable comprend en masse par rapport à la masse totale des composés (méth)acrylates, par ordre de préférence croissant, au moins 50 %, au moins 60 %, au moins 70 %, au moins 80 %, au moins 90 %, 100 % de composés (méth)acrylates choisis parmi les esters de l'acide acrylique ou méthacrylique comportant au moins deux fonctions acroyle (CH2=CH-CO-) ou méthacroyle (CH2=CH(CH3)-CO-),
- la composition polymérisable comprend :
   - au moins un oligomère uréthane-acrylique aliphatique,
   - au moins un monomère (méth)acrylate choisi parmi les monomères (méth)acrylates mono, bi, tri-fonctionnel,
   - au moins un initiateur de polymérisation,
- la composition polymérisable comprend :
   - au moins un oligomère uréthane-acrylique aliphatique,
   - au moins un monomère (méth)acrylate difonctionnel,
   - au moins un monomère (méth)acrylate trifonctionnel,
   - au moins un initiateur de polymérisation, de préférence un photoinitiateur,
- la composition polymérisable comprend en masse par rapport à la masse totale des composés (méth)acrylates :
   - 30 à 80 % en masse d'au moins un oligomère uréthane-acrylique aliphatique,
   - 20 à 70 % en masse d'au moins au moins un monomère (méth)acrylate choisi parmi un (méth)acrylate mono, bi, tri fonctionnel.

Selon l'invention, les initiateurs de polymérisation ne sont pas considérés comme des additifs.

La composition polymérisable peut être appliquée à température ambiante par tout moyen connu et notamment par enduction au rouleau, par aspersion, par trempage, par enduction au rideau, ou par pistoletage. La composition polymérisable est préférentiellement appliquée par enduction au rouleau. La vitesse de dépôt de la composition liquide peut être comprise entre 1 et 90 m/min.

La couche de protection temporaire peut être durcie :
- par séchage à une température inférieure à 200°C pendant une durée allant par exemple de 10 s à 180 s,
- par réticulation UV (différentes longueurs d'onde) de préférence à l'air libre et à température ambiante ou
- par faisceau d'électron.

La composition polymérisable comprend en outre un initiateur de polymérisation dont la nature est fonction du type de durcissement choisi. Par exemple, en cas de durcissement thermique, on utilise des initiateurs de type peroxyde de benzoyle. En cas de durcissement par rayonnement UV, on utilise des initiateurs dits photoinitiateurs.

Le substrat à protéger doit supporter un traitement thermique de type trempe. L'invention concerne donc tout substrat susceptible d'être trempé. Le substrat est de préférence un substrat en verre.

Avantageusement, le substrat portant la couche de protection temporaire n'a pas subi de traitement thermique de type trempe, recuit et/ou bombage, c'est-à-dire de traitement thermique à une température supérieure à 200 °C.

Le substrat en verre peut être plat, incolore et/ou teinté. L'épaisseur du substrat est de préférence comprise entre 1 et 19 mm, plus particulièrement entre 2 et 10 mm, voire entre 3 et 6 mm.

Selon une variante de l'invention, la couche de protection temporaire peut servir à protéger le revêtement fonctionnel pendant une étape de dépôt d'un autre revêtement. Cet autre revêtement peut être déposé sur une partie de la surface principale du substrat portant le revêtement fonctionnel ou sur une partie de la surface principale du substrat ne portant pas le revêtement fonctionnel.

Il est notamment connu que pour l'obtention de substrats bi-fonctionnalisés portant un revêtement fonctionnel sur chaque face principale, le contact du revêtement fonctionnel déposé en premier avec les rouleaux du dispositif de dépôt durant le second passage permettant le dépôt du deuxième revêtement entraîne des altérations dommageables de la qualité du premier revêtement (pollution, rayures). Ces altérations devenant visibles après dépôt du deuxième revêtement fonctionnel et éventuellement trempe. L'invention permet de pallier ce problème en protégeant le premier revêtement par une couche de protection destinée à disparaitre durant la trempe ou le bombage du substrat bi-fonctionnalisé.

Selon une autre variante de l'invention, la couche de protection temporaire peut servir à protéger la surface arrière du substrat pendant le dépôt d'un revêtement fonctionnel. En effet, le passage sur les rouleaux de la face arrière d'un substrat, par exemple en verre, lors du dépôt d'un revêtement fonctionnel, est susceptible d'altérer partiellement la dite surface (salissure, rayure). L'invention permet de pallier ce problème en protégeant la surface arrière du substrat avant dépôt du premier revêtement.

La couche de protection temporaire peut être déposée :
- sur chacune des surfaces principales du substrat, et/ou
- sur au moins un bord du substrat, et/ou
- sur chacun des bords du substrat.

Lorsque la couche de protection temporaire est déposée sur chacune des surfaces principales du substrat et sur chacun des bords du substrat, la protection chimique et/ou mécanique est alors conférée sur l'entière surface du substrat.

La couche de protection temporaire peut être déposée sur un substrat en verre avant ou après une étape de découpe, c'est-à-dire sur un substrat en verre à la taille finale ou proche de la taille finale (primitif).

L'invention concerne également le procédé d'obtention d'un article traité à température élevée. La température de traitement thermique est supérieure à 200 °C, supérieure à 300 °C, ou supérieure à 400 °C. Les traitements thermiques sont choisis parmi un une trempe et/ou un bombage.

Le traitement thermique nécessaire pour éliminer la couche de protection peut être un recuit dans un four statique ou dynamique. Le traitement thermique peut alors avoir pour objectif d'améliorer la cristallisation d'une ou plusieurs couches incluses dans l'empilement à protéger.

Le revêtement fonctionnel comprend au moins une couche fonctionnelle déposée lors d'une étape de dépôt par magnétron.

Le procédé de l'invention comprend une ou plusieurs des caractéristiques suivantes :
- la composition polymérisable est appliquée par enduction au rouleau,
- la composition polymérisable présente une viscosité mesurée entre 20 et 25 °C bornes incluses, comprise entre 0,05 et 5 Pa.s bornes incluses;
- la surface rugueuse est obtenue par le dépôt par enduction au rouleau avec une vitesse d'application suffisamment rapide pour créer en surface des instabilités et une réticulation réalisée suffisamment rapidement pour figer ces instabilités,
- la surface rugueuse est obtenue grâce à l'utilisation d'un rouleau texturé,
- la surface rugueuse est obtenue par embossage de la surface de la composition polymérisable une fois déposée et avant réticulation,
- le revêtement fonctionnel est déposé par pulvérisation cathodique assistée par un champ magnétique et en ce que la couche de protection temporaire est directement au contact du revêtement fonctionnel,
- la couche de protection temporaire est réticulée par réticulation UV,
- il comporte une étape de lavage à l'eau entre l'étape de protection et l'étape de traitement thermique et de déprotection lors de laquelle la couche de protection temporaire n'est pas éliminée.

La couche de protection temporaire est formée immédiatement après l'étape de dépôt du revêtement fonctionnel. Selon l'invention, on considère que la couche de protection temporaire peut être formée « immédiatement après », lorsque la couche de protection temporaire peut être formée moins de 10 minutes, de préférence moins de 5 minutes et mieux moins de 1 minutes après l'étape de dépôt du revêtement fonctionnel.

La couche de protection temporaire selon l'invention peut être appliquée sur des substrats de verre de grande dimension notamment sur des substrats de verre dits « PLF » (Plateaux de verre Large Format). Ces substrats de verre ont donc au moins une dimension, en général la largeur, correspondant à la largeur du ruban de verre dont ils sont issus. L'autre dimension, en général la longueur, correspond à la longueur de ruban découpé. Les substrats de verres dits « PLF » ont typiquement des dimensions de 3,21 m par environ 6 m.

Selon un mode de réalisation, l'article comprend un substrat de verre ayant au moins une dimension supérieure à 3 m, voir supérieure à 6 m.

Selon un autre mode de réalisation, l'article comprend un substrat de verre ayant au moins deux dimensions supérieures à 3 m, voir une dimension supérieure à 3 m et une dimension supérieure à 6 m.

Le substrat en verre protégé selon l'invention peut être empilé sans pollution croisée, ni apparition de rayures mécaniques, immédiatement après dépôt des revêtements fonctionnels.

### Exemples

### I. Matériaux utilisés

### 1. Substrats revêtus du revêtement fonctionnel

Les substrats utilisés sont des substrats en verre plan d'environ 6 mm d'épaisseur obtenus par un procédé de flottage (" float ").

Les revêtements fonctionnels comprennent un empilement de couches minces déposées grâce à un dispositif de pulvérisation cathodique assisté par champ magnétique (magnétron).

L'empilement de couches minces comporte successivement à partir du substrat une alternance de trois revêtements diélectriques et de deux couches d'argent (couches métalliques fonctionnelles), chaque revêtement diélectrique comportant au moins une couche diélectrique, de manière à ce que chaque couche métallique fonctionnelle soit disposée entre deux revêtements diélectriques. La couche du revêtement fonctionnel la plus éloignée du substrat est une couche de nitrure de titane et de zirconium de 1 à 5 nm. L'épaisseur totale de ce revêtement fonctionnel est comprise entre 150 et 200 nm.

### 2. Préparation des compositions polymérisables

Les compositions polymérisables ont été préparées. Ces compositions comprennent les constituants de la matrice polymérique, des initiateurs de polymérisation et éventuellement des additifs.

Les constituants de la matrice polymérique comprennent les oligomères, monomères et éventuellement prépolymères. Un mélange d'oligomères et de monomères comprenant au moins une fonction acrylate commercialisés par la société Sartomer a été utilisé avec notamment :
- CN9276 : oligomère uréthane-acrylate aliphatique tétra-fonctionnel,
- SR351 : triméthylolpropane triacrylate, monomère acrylate tri-fonctionnel,
- SR833S : tricyclodécane diméthanol diacrylate, monomère acrylate di-fonctionnel.

La présence de l'oligomère uréthane-acrylate permet de moduler les propriétés de dureté et de souplesse de la couche de protection temporaire.

L'initiateur de polymérisation utilisé dans ces exemples est I'Irgacure^{®} 500 ou Irgacure^{®} 184, commercialisés par BASF.

Les différents constituants et additifs sont mélangés par ultrason.

Les compositions testées sont définies dans tableau ci-dessous en parties en masse.

| Composition | Parties en poids | Viscosité |
|---|---|---|
| Matrice polymérique : | | |
| - oligomère acrylate | 60 | 5,8 Pa.s |
| - di-fonctionnel acrylate | 20 | 140 mPa.s |
| - tri-fonctionnel acrylate | 20 | 110 mPa.s |
| Initiateur UV | + 10 | - |

La viscosité de la composition polymérisable est mesurée soit à l'aide d'un viscosimètre Anton parr ou à la coupe Ford n°5. La composition polymérisable présente une viscosité à 20 °C de 0,8± 0,1 Pa.s

### 3. Préparation des articles testés

| **Articles** | **F** | **E** | **R1** | **R2** |
|---|---|---|---|---|
| Substrat + Revêtement fonctionnel | Oui | Oui | Oui | Oui |
| Composition polymérisable | Non | E | E | E |

L'article E correspond à un article telle que décrit dans la demande WO 2015/019022. Cet article ne présente pas la rugosité telle que revendiquée. La composition polymérisable est appliquée sur le substrat en verre revêtu du revêtement fonctionnel par enduction au rouleau. Le rouleau applicateur tourne à une vitesse entre 15 et 25 m/min. La vitesse de défilement du substrat est également entre 15 et 25 m/min. La couche temporaire est réticulée par rayonnement UV. Les épaisseurs de compositions polymérisables déposées sont comprises entre 10 et 20 µm.

L'article R1 correspond à un article selon l'invention. La composition polymérisable est appliquée sur le substrat en verre revêtu du revêtement fonctionnel par enduction au rouleau. Le rouleau applicateur tourne à une vitesse d'environ 40 m/min. La vitesse de défilement du substrat est également de 40 m/min. La couche temporaire est immédiatement réticulée par rayonnement UV. L'article R1 selon l'invention présente une rugosité telle que revendiquée. L'épaisseur de composition polymérisable déposée correspond à l'épaisseur de la couche de protection temporaire et est comprises entre 10 et 20 µm.

Les couches de protection temporaires sont obtenues par réticulation par un rayonnement UV fourni par une lampe à mercure de puissance 120 W.

L'article R2 correspond à un article selon l'invention. La composition polymérisable aurait été appliquée sur le substrat en verre revêtu du revêtement fonctionnel par enduction centrifuge (spin-coating). La rugosité de surface est obtenue par le procédé tel que décrit dans la demande FR 2990384. Un motif est imprimé à la surface grâce à un tampon en polydiméthylsiloxane PDMS. Le procédé d'impression du motif comporte les étapes suivantes :
- application du tampon sur la surface de la couche de composition polymérisable,
- introduction de l'article revêtu de la composition polymérisable et du tampon dans une poche en matériau non perméable,
- introduction de la poche et de son contenu dans une enceinte hermétique,
- mise sous vide de l'enceinte,
- scellage de la poche avant réintroduction de l'air dans l'enceinte,
- réticulation UV
- séparation de l'article et du tampon.

La rugosité de surface du tampon est définie par les paramètres suivants :
- Sa : 0,7 µm,
- Sz : 7 µm
- Rsm : 7 µm.

### II. Caractérisation

### 1. Epaisseurs

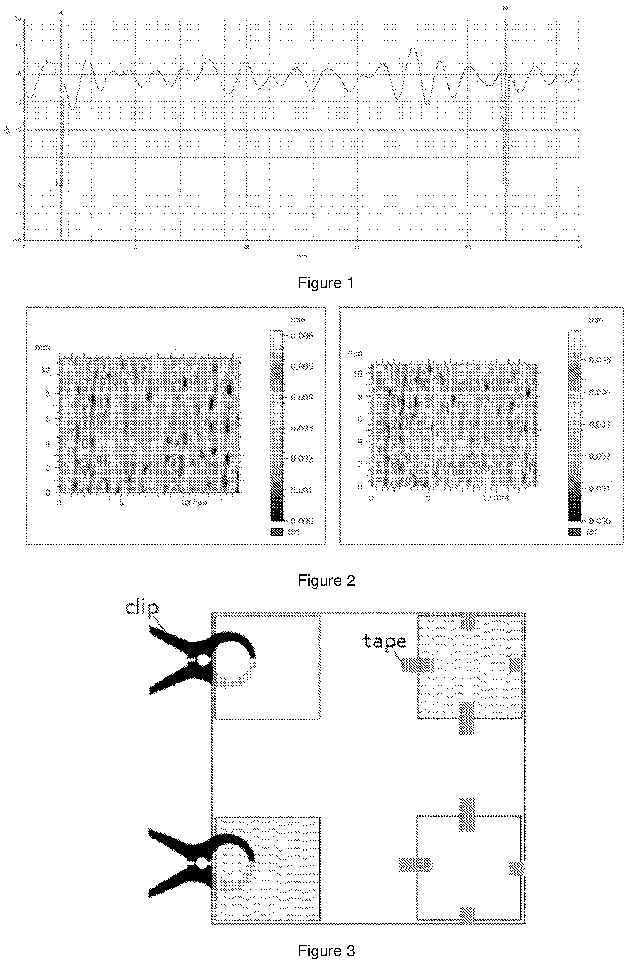

Les épaisseurs peuvent être mesurées l'aide d'un profilomètre Dektak. Deux rayures espacées d'environ 2 cm sont utilisées pour corriger la ligne de base et positionner le substrat à 0 µm, comme le montre la figure 1. L'épaisseur est obtenue en prenant la valeur moyenne du profil entre les deux rayures.

Dans le cas de l'article R1, la rugosité correspond à des défauts de planéité sous la forme de vaguelettes. Le profil est réalisé perpendiculairement à ces vaguelettes.

Les épaisseurs des couches de protection temporaire obtenues dans ces conditions sont de 10 à 20 µm.

### 2. Détermination de la rugosité de surface

La rugosité de surface a été déterminée à l'aide d'un profilomètre interférentiel Newview^{®} de la société Zygo. La figure 2 illustre des profils en 2 dimensions de la surface avant (image de gauche) et après correction (image de droite).

Le profil 2D est réalisé à 3 positions différentes pour chaque échantillon avec un grossissement x 0,5 en utilisant une image A de 14,49 x 10,87 mm². Sur les images présentées, on observe bien une rugosité sous forme de vaguelette.

Les données sont ensuite traitées à l'aide du logiciel MountainsMap^{®}. Dans une première étape, le fond est rectifié en soustrayant un plan (Cf. Figure 2, image de droite). Les paramètres de rugosité sont calculés, sur l'image corrigée, selon la norme ISO 25178 en utilisant une longueur d'analyse du profil d'environ 15 mm combinée à un filtre Gaussien passe bas de 2,5 mm (ISO 13565-1 pour les profils). Ces paramètres sont judicieusement choisis afin de distinguer les paramètres d'ondulation des paramètres de rugosité. Sa et Sq correspondent à la hauteur moyenne arithmétique du profil et la hauteur moyenne quadratique du profil de la surface. Sz correspond à la hauteur maximale du profil de la surface.

L'image est ensuite décomposée en 480 profils horizontaux, c'est-à-dire perpendiculaire à la rugosité. Le logiciel calcule pour chaque profil la période moyenne Rsm et son écart-type.

| Articles | E | R1 | R2 |
|---|---|---|---|
| Epaisseurs (e) | 15 µm | 15 µm | 15 µm |
| Paramètre de rugosité : | | | |
| Sa | 0,10 ± 0,05µm | 0,68 ± 0,05 µm | 0,53 ± 0,05 µm |
| Sz | 0,53 ± 1µm | 7,2 ± 1 µm | 5,8 ± 1 µm |
| Sq | 0,13 ± 0,05µm | 0,86 ± 0,05 µm | 0,66 ± 0,05 µm |
| Rsm | 1,5 ± 0,1 mm | 1,1 ± 0,1 mm | 1,1 ± 0,1 mm |
| (Sa/(e))*100 | 0,67 % | 4,5 % | 3,5 % |
| (Sz/(e))*100 | 3,5 % | 48% | 39% |

Les articles protégés R1et R2 ont chacun :
- un paramètre de rugosité surfacique Sa, représentant au moins 3 % de l'épaisseur moyenne de la couche de protection temporaire,
- un paramètre de rugosité surfacique Sz, correspondant à la hauteur maximale de la surface, représentant au moins 30 % de l'épaisseur moyenne de la couche de protection temporaire.

### 3. Test d'adhésion

Des petites plaques mesurant 10 cm x 10 cm ont été mises en contact sur un substrat de verre plat mesurant 30 cm x 30 cm lavé à l'eau puis séché (ci-après grande plaque) :
- une plaque d'Article F (comparatif) fixée avec 4 morceaux de ruban adhésif,
- une plaque d'Article F (comparatif) fixée avec une pince,
- une plaque d'Article E (comparatif) fixée avec 4 morceaux de ruban adhésif,
- une plaque d'Article E (comparatif) fixée avec une pince,
- une plaque d'Article R1 (invention) fixée avec 4 morceaux de ruban adhésif:
- une plaque d'Article R1 (invention) fixée avec une pince.

La figure 3 illustre cet essai.

L'ensemble est ensuite mouillé avec de l'eau du robinet et séché rapidement avec de l'air comprimé. De l'eau reste piégée entre les plaques et le substrat de verre. Puis l'ensemble est laissé sécher pendant 4 jours. Après 4 jours, on enlève les pinces et les rubans adhésifs.

Les deux plaques d'articles F ne comprenant pas la couche de protection temporaire adhèrent à la grande plaque. Elles ne peuvent pas être désolidarisées de la grande plaque de verre. Il n'est pas non plus possible de faire bouger par translation les plaques F par rapport à la grande plaque.

Les deux plaques d'articles E comprenant une couche de protection temporaire telle que décrit dans la demande WO 2015/019022 adhèrent à la grande plaque. Elles ne peuvent pas être désolidarisées de la grande plaque de verre. Il n'est pas non plus possible de faire bouger par translation les plaques E par rapport à la grande plaque.

Les deux plaques d'articles R1 selon l'invention n'adhèrent pas à la grande plaque. Elles peuvent facilement être mise en mouvement et désolidarisées de la grande plaque de verre.

## Revendications

1. Article comprenant un substrat de verre comprenant deux faces principales définissant deux surfaces principales séparées par des bords et une couche de protection temporaire comprenant une matrice polymérique organique déposée sur au moins une partie d'une surface principale du substrat de verre **caractérisé en ce que** la couche de protection temporaire présente une surface rugueuse définie par un paramètre de rugosité surfacique Sa, correspondant à la hauteur moyenne arithmétique du profil de la surface, supérieur à 0,2 µm.

2. Article selon la revendication 1 **caractérisé en ce que** la surface rugueuse présente un paramètre de rugosité surfacique Sz, correspondant à la hauteur maximale du profil de la surface, supérieur à 1,0 µm.

3. Article selon l'une quelconque des revendications précédentes **caractérisé en ce que** la surface rugueuse présente un paramètre de rugosité Rsm, correspondant à la largeur moyenne des éléments du profil, supérieur à 0,5 mm.

4. Article selon l'une quelconque des revendications précédentes **caractérisé en ce que** le paramètre de rugosité surfacique Sa, correspondant à la hauteur moyenne arithmétique du profil de la surface, représente au moins 1 % de l'épaisseur moyenne de la couche de protection temporaire.

5. Article selon l'une quelconque des revendications précédentes **caractérisé en ce que** le paramètre de rugosité surfacique Sz, correspondant à la hauteur maximale de la surface, représente au moins 10 % de l'épaisseur moyenne de la couche de protection temporaire.

6. Article selon l'une quelconque des revendications précédentes **caractérisé en ce que** le substrat est revêtu d'un revêtement fonctionnel déposé sur au moins une partie d'une surface principale et la couche de protection temporaire est déposée sur au moins une partie du revêtement fonctionnel.

7. Article selon l'une quelconque des revendications précédentes **caractérisé en ce que** le revêtement fonctionnel comprend un empilement de couches minces comportant successivement à partir du substrat une alternance de n couches métalliques fonctionnelles à base d'argent ou d'alliage métallique contenant de l'argent, et de (n+1) revêtements antireflets, chaque revêtement antireflet comportant au moins une couche diélectrique, de manière à ce que chaque couche métallique fonctionnelle soit disposée entre deux revêtements antireflets.

8. Article selon l'une quelconque des revendications précédentes **caractérisé en ce que** le substrat de verre a au moins une dimension supérieure à 3 m, voir supérieure à 6 m.

9. Article selon l'une quelconque des revendications précédentes **caractérisé en ce que** le substrat de verre a au moins deux dimensions supérieures à 3 m, voir une dimension supérieure à 3 m et une dimension supérieure à 6 m.

10. Article selon l'une quelconque des revendications précédentes **caractérisé en ce que** la couche de protection temporaire est déposée par enduction au rouleau et présente en surface des défauts de planéité sous la forme de vaguelettes.

11. Article selon la revendication précédente **caractérisé en ce que** les vaguelettes sont parallèles à l'axe de rotation du rouleau de dépôt.

12. Procédé d'obtention d'un article traité à température élevée comprenant un substrat de verre comprenant deux faces principales définissant deux surfaces principales séparées par des bords, ledit substrat en verre portant éventuellement un revêtement fonctionnel déposé sur au moins une partie d'une surface principale, ledit procédé comprenant les étapes suivantes :
une étape de protection de l'article comprenant :
- préparer une composition polymérisable,
- appliquer et réticuler la composition polymérisable sur au moins une partie du substrat éventuellement revêtu du revêtement fonctionnel de façon à former une couche de protection temporaire présentant une épaisseur d'au moins 1 micromètre et une surface rugueuse définie par un paramètre de rugosité surfacique Sa, correspondant à la hauteur moyenne arithmétique de la surface, supérieur à 0,2 µm,
une même étape de traitement thermique et de déprotection de l'article comprenant :
- éliminer la couche de protection temporaire par traitement thermique à température élevée de type trempe, recuit et/ou bombage, notamment à une température supérieure à 200 °C, supérieure à 300 °C, ou supérieure à 400 °C.

13. Procédé d'obtention d'un article traité selon la revendication 12 **caractérisé en ce que** la composition polymérisable est appliquée par enduction au rouleau.

14. Procédé d'obtention d'un article selon l'une quelconque des revendications 12 à 13 **caractérisé en ce que** la surface rugueuse est obtenue par le dépôt par enduction au rouleau avec une vitesse d'application suffisamment rapide pour créer en surface des instabilités et une réticulation réalisée suffisamment rapidement pour figer ces instabilités.

15. Procédé d'obtention d'un article selon l'une quelconque des revendications 12 à 13 **caractérisé en ce que** la surface rugueuse est obtenue grâce à l'utilisation d'un rouleau texturé.

16. Procédé d'obtention d'un article traité selon l'une quelconque des revendications 12 à 13 **caractérisé en ce que** la surface rugueuse est obtenue par embossage de la surface de la composition polymérisable une fois déposée et avant réticulation.

17. Procédé d'obtention d'un article selon l'une quelconque des revendications 12 à 16 **caractérisé en ce que** le revêtement fonctionnel est déposé par pulvérisation cathodique assistée par un champ magnétique et **en ce que** la couche de protection temporaire est directement au contact du revêtement fonctionnel.

18. Procédé d'obtention d'un article selon l'une quelconque des revendications 12 à 17 **caractérisé en ce qu'**il comporte une étape de lavage à l'eau entre l'étape de protection et l'étape de traitement thermique et de déprotection lors de laquelle la couche de protection temporaire n'est pas éliminée.

19. Procédé d'obtention d'un article selon l'une quelconque des revendications 12 à 18 **caractérisé en ce que** le substrat de verre a au moins deux dimensions supérieures à 3 m, voir une dimension supérieure à 3 m et une dimension supérieure à 6 m.

## Patentansprüche

1. Artikel, umfassend ein Glassubstrat, das zwei Hauptflächen umfasst, die zwei durch Ränder getrennte Hauptoberflächen definieren, und eine temporäre Schutzschicht, die eine organische Polymermatrix umfasst, die auf mindestens einem Teil einer Hauptoberfläche des Glassubstrats abgeschieden ist, **dadurch gekennzeichnet, dass** die temporäre Schutzschicht eine raue Oberfläche aufweist, die durch einen Oberflächenrauheitsparameter Sa, der der arithmetischen mittleren Höhe des Oberflächenprofils entspricht, von mehr als 0,2 µm definiert ist.

2. Artikel nach Anspruch 1, **dadurch gekennzeichnet, dass** die raue Oberfläche einen Oberflächenrauheitsparameter Sz, der der maximalen Höhe des Oberflächenprofils entspricht, von mehr als 1,0 µm aufweist.

3. Artikel nach einem der vorstehenden Ansprüche, **dadurch gekennzeichnet, dass** die raue Oberfläche einen Rauheitsparameter Rsm, der der mittleren Breite der Profilelemente entspricht, von mehr als 0,5 mm aufweist.

4. Artikel nach einem der vorstehenden Ansprüche, **dadurch gekennzeichnet, dass** der Oberflächenrauheitsparameter Sa, der der arithmetischen mittleren Höhe des Oberflächenprofils entspricht, mindestens 1 % der mittleren Dicke der temporären Schutzschicht beträgt.

5. Artikel nach einem der vorstehenden Ansprüche, **dadurch gekennzeichnet, dass** der Oberflächenrauheitsparameter Sz, der der maximalen Höhe der Oberfläche entspricht, mindestens 10 % der mittleren Dicke der temporären Schutzschicht beträgt.

6. Artikel nach einem der vorstehenden Ansprüche, **dadurch gekennzeichnet, dass** das Substrat mit einer Funktionsbeschichtung beschichtet ist, die auf mindestens einem Teil einer Hauptoberfläche abgeschieden ist, und die temporäre Schutzschicht auf mindestens einem Teil der Funktionsbeschichtung abgeschieden ist.

7. Artikel nach einem der vorstehenden Ansprüche, **dadurch gekennzeichnet, dass** die Funktionsbeschichtung eine Dünnschichtstapelung umfasst, die ausgehend von dem Substrat aufeinanderfolgend eine Abfolge von n metallischen Funktionsschichten auf Basis von Silber oder einer silberhaltigen Metalllegierung und von (n+1) Antireflexbeschichtungen beinhaltet, wobei jede Antireflexbeschichtung mindestens eine dielektrische Schicht beinhaltet, sodass jede metallische Funktionsschicht zwischen zwei Antireflexbeschichtungen angeordnet ist.

8. Artikel nach einem der vorstehenden Ansprüche, **dadurch gekennzeichnet, dass** das Glassubstrat mindestens eine Abmessung von mehr als 3 m, sogar mehr als 6 m, aufweist.

9. Artikel nach einem der vorstehenden Ansprüche, **dadurch gekennzeichnet, dass** das Glassubstrat mindestens zwei Abmessungen von mehr als 3 m, sogar eine Abmessung von mehr als 3 m und eine Abmessung von mehr als 6 m aufweist.

10. Artikel nach einem der vorstehenden Ansprüche, **dadurch gekennzeichnet, dass** die temporäre Schutzschicht durch Walzenauftrag abgeschieden wird und an der Oberfläche Planheitsfehler in Form von kleinen Wellen aufweist.

11. Artikel nach dem vorstehenden Anspruch, **dadurch gekennzeichnet, dass** die kleinen Wellen parallel zu der Rotationsachse der Abscheidungswalze sind.

12. Verfahren zur Herstellung eines bei erhöhter Temperatur behandelten Artikels, der ein Glassubstrat mit zwei Hauptflächen umfasst, die zwei durch Ränder getrennte Hauptoberflächen definieren, wobei das Glassubstrat eventuell eine Funktionsbeschichtung trägt, die auf mindestens einem Teil einer Hauptoberfläche abgeschieden ist, wobei das Verfahren die folgenden Schritte umfasst:
einen Schritt zum Schützen des Artikels, umfassend:
- Ansetzen einer polymerisierbaren Zusammensetzung,
- Aufbringen und Vernetzen der polymerisierbaren Zusammensetzung auf mindestens einem Teil des eventuell mit der Funktionsbeschichtung beschichteten Substrats, um eine temporäre Schutzschicht zu bilden, die eine Dicke von mindestens 1 Mikrometer und eine raue Oberfläche aufweist, die durch einen Oberflächenrauheitsparameter Sa, der der arithmetischen mittleren Höhe der Oberfläche entspricht, von mehr als 0,2 µm definiert ist,
einen gleichen Schritt der Wärmebehandlung und Entschützung des Artikels, umfassend:
- Entfernen der temporären Schutzschicht durch Wärmebehandlung bei hoher Temperatur vom Typ Härtung, Glühen und/oder Biegen, insbesondere bei einer Temperatur von mehr als 200 °C, mehr als 300 °C oder mehr als 400 °C.

13. Verfahren zur Herstellung eines nach Anspruch 12 behandelten Artikels, **dadurch gekennzeichnet, dass** die polymerisierbare Zusammensetzung durch Walzenauftrag aufgebracht wird.

14. Verfahren zur Herstellung eines Artikels nach einem der Ansprüche 12 bis 13, **dadurch gekennzeichnet, dass** die raue Oberfläche durch die Abscheidung durch Walzenauftrag mit einer ausreichend schnellen Aufbringungsgeschwindigkeit, um an der Oberfläche Instabilitäten zu erzeugen, und einer Vernetzung erhalten wird, die schnell genug durchgeführt wird, um diese Instabilitäten erstarren zu lassen.

15. Verfahren zur Herstellung eines Artikels nach einem der Ansprüche 12 bis 13, **dadurch gekennzeichnet, dass** die raue Oberfläche durch die Verwendung einer strukturierten Walze erhalten wird.

16. Verfahren zur Herstellung eines nach einem der Ansprüche 12 bis 13 behandelten Artikels, **dadurch gekennzeichnet, dass** die raue Oberfläche durch Prägen der Oberfläche der polymerisierbaren Zusammensetzung sobald abgeschieden und vor dem Vernetzen erhalten wird.

17. Verfahren zur Herstellung eines Artikels nach einem der Ansprüche 12 bis 16, **dadurch gekennzeichnet, dass** die Funktionsbeschichtung durch Kathodenzerstäubung unterstützt durch ein Magnetfeld abgeschieden wird und **dadurch, dass** die temporäre Schutzschicht direkt mit der Funktionsbeschichtung in Kontakt vorliegt.

18. Verfahren zur Herstellung eines Artikels nach einem der Ansprüche 12 bis 17, **dadurch gekennzeichnet, dass** es zwischen dem Schutzschritt und dem Wärmebehandlungs- und Entschützungsschritt einen Waschschritt mit Wasser beinhaltet, bei dem die temporäre Schutzschicht nicht entfernt wird.

19. Verfahren zur Herstellung eines Artikels nach einem der Ansprüche 12 bis 18, **dadurch gekennzeichnet, dass** das Glassubstrat mindestens zwei Abmessungen von mehr als 3 m, sogar eine Abmessung von mehr als 3 m und eine Abmessung von mehr als 6 m aufweist.

## Claims

1. An article comprising a glass substrate comprising two main faces defining two main surfaces separated by edges and a temporary protective layer comprising an organic polymer matrix deposited on at least one portion of a main surface of the glass substrate, **characterized in that** the temporary protective layer has a rough surface defined by a surface roughness parameter Sa, corresponding to the arithmetic mean height of the profile of the surface, of greater than 0.2 µm.

2. The article as claimed in claim 1, **characterized in that** the rough surface has a surface roughness parameter Sz, corresponding to the maximum height of the profile of the surface, of greater than 1.0 µm.

3. The article as claimed in either one of the preceding claims, **characterized in that** the rough surface has a roughness parameter Rsm, corresponding to the mean width of the elements of the profile, of greater than 0.5 mm.

4. The article as claimed in any one of the preceding claims, **characterized in that** the surface roughness parameter Sa, corresponding to the arithmetic mean height of the profile of the surface, represents at least 1% of the mean thickness of the temporary protective layer.

5. The article as claimed in any one of the preceding claims, **characterized in that** the surface roughness parameter Sz, corresponding to the maximum height of the surface, represents at least 10% of the mean thickness of the temporary protective layer.

6. The article as claimed in any one of the preceding claims, **characterized in that** the substrate is coated with a functional coating deposited on at least one portion of a main surface and the temporary protective layer is deposited on at least one portion of the functional coating.

7. The article as claimed in any one of the preceding claims, **characterized in that** the functional coating comprises a stack of thin layers successively comprising, starting from the substrate, an alternation of n functional metallic layers based on silver or on a metal alloy containing silver, and of (n+1) antireflection coatings, each antireflection coating comprising at least one dielectric layer, so that each functional metallic layer is positioned between two antireflection coatings.

8. The article as claimed in any one of the preceding claims, **characterized in that** the glass substrate has at least one dimension of greater than 3 m, or even of greater than 6 m.

9. The article as claimed in any one of the preceding claims, **characterized in that** the glass substrate has at least two dimensions of greater than 3 m, or even one dimension of greater than 3 m and one dimension of greater than 6 m.

10. The article as claimed in any one of the preceding claims, **characterized in that** the temporary protective layer is deposited by roll coating and that has flatness defects in the form of wavelets at the surface.

11. The article as claimed in the preceding claim, **characterized in that** the wavelets are parallel to the axis of rotation of the deposition roll.

12. A process for obtaining an article treated at high temperature comprising a glass substrate comprising two main faces defining two main surfaces separated by edges, said glass substrate optionally bearing a functional coating deposited on at least one portion of a main surface, said process comprising the following steps:
a step of protecting the article comprising:
- preparing a polymerizable composition,
- applying and crosslinking the polymerizable composition on at least one portion of the substrate optionally coated with the functional coating so as to form a temporary protective layer having a thickness of at least 1 micrometer and a rough surface defined by a surface roughness parameter Sa, corresponding to the arithmetic mean height of the surface, of greater than 0.2 µm,
a same step of heat treating and deprotecting the article comprising:
- removing the temporary protective layer by high-temperature heat treatment of tempering, annealing and/or bending type, in particular at a temperature above 200°C, above 300°C, or above 400°C.

13. The process for obtaining a treated article as claimed in claim 12, **characterized in that** the polymerizable composition is applied by roll coating.

14. The process for obtaining an article as claimed in any one of claims 12 to 13, **characterized in that** the rough surface is obtained by deposition by roll coating with an application speed fast enough to create instabilities at the surface and a crosslinking carried out fast enough to set these instabilities.

15. The process for obtaining an article as claimed in either one of claims 12 and 13, **characterized in that** the rough surface is obtained owing to the use of a textured roll.

16. The process for obtaining a treated article as claimed in either one of claims 12 and 13, **characterized in that** the rough surface is obtained by embossing the surface of the polymerizable composition once deposited and before crosslinking.

17. The process for obtaining an article as claimed in any one of claims 12 to 16, **characterized in that** the functional coating is deposited by magnetron sputtering and **in that** the temporary protective layer is directly in contact with the functional coating.

18. The process for obtaining an article as claimed in any one of claims 12 to 17, **characterized in that** it comprises a step of washing with water between the protecting step and the heat treating and deprotecting step during which the temporary protective layer is not removed.

19. The process for obtaining an article as claimed in any one of claims 12 to 18, **characterized in that** the glass substrate has at least two dimensions of greater than 3 m, or even one dimension of greater than 3 m and one dimension of greater than 6 m.
